# EUROPEAN PATENT SPECIFICATION

(11) **EP 2 433 484 B1**
(45) Date of publication and mention of the grant of the patent: **27.01.2016**
(21) Application number: 10777695.7
(22) Date of filing: 13.05.2010
(51) Int. Cl.: A01D 34/73

(54) **CUTTING BLADE MOUNTING AND REMOVAL STRUCTURE FOR MOWER**
STRUKTUR ZUR MONTAGE UND ENTFERNUNG EINER SCHNEIDKLINGE FÜR EINEN MÄHER
STRUCTURE DE MONTAGE ET DE DÉMONTAGE D'UNE LAME DE COUPE DE TONDEUSE

(30) Priority: 19.05.2009 JP 2009121332
(43) Date of publication of application: 28.03.2012
(73) Proprietor: Chikusui Canycom, Inc., Ukiha-gun, Fukuoka-ken (JP)
(72) Inventor: WAKAI, Mituhiro, Ukiha-shi Fukuoka 839-1396 (JP); IKEDA, Katuhisa, Ukiha-shi Fukuoka 839-1396 (JP)
(74) Representative: Haley, Stephen
(86) International application number: PCT/JP2010/058100
(87) International publication number: WO 2010/134462

(56) References cited:
- EP-A1- 0 486 459
- DE-A1- 2 507 200
- JP-A- 11 235 113
- JP-A- 54 123 455
- JP-A- S54 123 455
- JP-B2- 61 030 528
- JP-U- H0 199 110
- JP-U- H0 448 934
- JP-Y2- 63 010 658

## Description

### Technical Field

The present invention relates to a mount/dismount structure of a mowing blade of a mowing machine, and particularly, relates to a mount/dismount structure of a mowing blade fitted to a front end of a stay of a mowing machine that achieves simple and secure fitting of the mowing blade, without requiring a particular tool.

### Background Art

In general, a mowing machine includes a rotating body that is driven by a motor, and a mowing blade that is fitted to a front end of the rotating body.

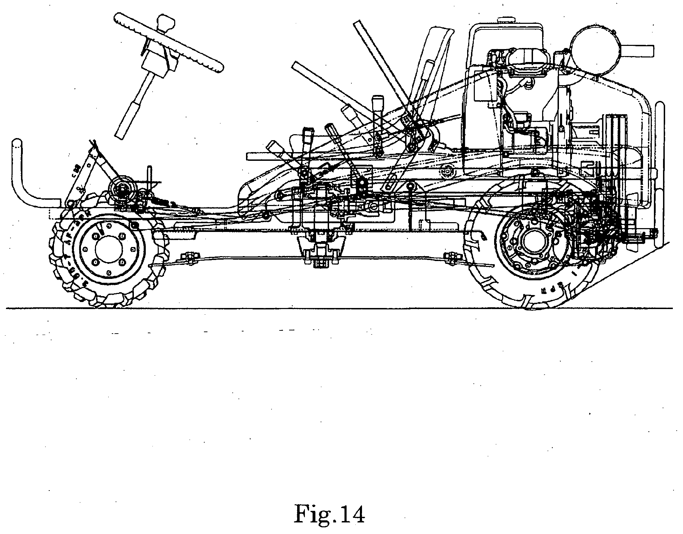

Further, a mowing vehicle includes a steering seat, a steering wheel, and various operation levers that a driver uses to drive the mowing vehicle, and a mowing unit that mows grass by a rotary cutter provided at a bottom of the vehicle, as shown in Fig. 14.

These mowing machines have a driving shaft that is driven by a motor, a stay that is connected to the driving shaft and rotates horizontally, and a mowing blade that is fixed to both ends of the stay. The mowing machines mow grass while horizontally rotating the rotary cutter of the mowing unit.

The mowing blade at the front end of the stay is fixed with bolts and nuts. When the mowing blade is abraded and damaged, the mowing blade is dismounted and can be replaced or repaired.

A technique relating to these mowing machines is disclosed in Japanese Patent Application Laid-Open No. 2002-27815, for example.
Patent Literature 1: Japanese Patent Application Laid-Open No. 2002-27815

### DISCLOSURE OF THE INVENTION

### Problem to be Solved by the Invention

According to the above conventional technique, there is a problem in that it is difficult to replace the mowing blade when replacing the mowing blade or at a maintenance time since the mowing blade is fastened to the front end of the stay with bolts and nuts.

The invention has been achieved to solve the above conventional problem, and the invention has an object of providing a mount/dismount structure of a mowing blade of a mowing machine that can simply and securely fit the mowing blade, without requiring a special tool.

EP0486459, DE2507200, and JP S54123455 each disclose a mowing blade of a mowing machine.

### Means for Solving the Problem

As a means for achieving the above object, according to a mount/dismount structure of a mowing blade of a mowing machine according to claim 1, the mowing blade is fitted to a head portion of a rotary stay of the mowing machine. A fitting trench of the mowing blade is formed on the head portion of the stay. The mowing blade is rotatably fitted to the fitting trench via a locking portion. The fitting trench has a mount/dismount portion of the locking portion and a fixing portion of the locking portion. The locking portion is inserted from the mount/dismount portion, and the mowing blade is fitted by sliding the locking portion to the fixing portion along the fitting trench.

The fitting trench is configured by a cut hole piercing through a front to a back of the stay in a plate shape. The locking portion is configured to lock a shaft portion by piercing the shaft portion through the fitting trench. The locking portion includes a head portion that is locked in the stay, the shaft portion that is connected to the stay by piercing through the mowing blade, and a seat portion that is locked with the mowing blade.

The mount/dismount portion of the fitting trench has a wide hole that makes it possible to mount/dismount the head portion of the locking portion. A slide portion of the fitting trench and the fixing portion may have a small hole set respectively to block dropout of the head portion that is locked. The slide direction of the slide portion is bent or branched.

The mount/dismount portion may be set at a base side of the stay, and the fixing portion is set at a front end side of the stay.

The shaft portion that may be pierced through the fitting trench can have a shaft width changed relative to the fitting trench by rotating the shaft portion. The slide portion may have a trench width that allows the shaft portion to pass there only when a width of the shaft portion is set small.

The bent portion of the slide portion of the fitting trench may include an enlarged portion of the hole to enable the locking portion to change a direction.

The shaft portion of the locking portion may be configured to integrally rotate with the mowing blade. At a mount/dismount time, a direction of a shaft width can be set by controlling the mowing blade.

### Effects of the Invention

By employing the above configurations, the invention has the following effects.

In the mount/dismount structure of a mowing blade of a mowing machine according to the present invention, the fitting trench of the mowing blade has the mount/dismount portion of the locking portion, and the fixing portion of,the locking portion. The locking portion is inserted from the mount/dismount portion, and the mowing blade is fitted by sliding the locking portion to the fixing portion along the fitting trench. Therefore, a distance from the mount/dismount portion to the fixing portion can be secured, and the mowing blade that is once fixed to the stay is not easily dismounted.

The fitting trench is configured by a cut hole piercing through a front to a back of the stay in a plate shape. The locking portion is configured to lock the shaft portion by piercing the shaft portion through the fitting trench. The locking portion includes the head portion that is locked in the stay, the shaft portion that is connected to the stay by piercing through the mowing blade, and the seat portion that is locked with the mowing blade. Therefore, a simple and secure mount/dismount structure can be achieved.

The mount/dismount portion of the fitting trench has a wide hole that makes it possible to mount/dismount the head portion of the locking portion. The slide portion of the fitting trench and the fixing portion have each small hole set. Therefore, the mowing blade can be mounted/dismounted from the mount/dismount portion, and at the same time, separation and dropout of the mowing blade from the slide portion and the fixing portion can be blocked.

A slide direction of the slide portion is bent or branched. Therefore, backsliding of the mowing blade that is once fixed is blocked.

The mount/dismount portion is set at a base side of the stay, and the fixing portion is set at a front end side of the stay. Since the mowing blade is always biased toward the fixing portion by centrifugal force during operation, the mowing blade has no risk of being dismounted.

The shaft portion that is pierced through the fitting trench can have a shaft width changed. The slide portion has a trench width that allows the shaft portion to pass there only when a width of the shaft portion is set small. Therefore, the mowing blade that is once fixed cannot be separated unless a position of the shaft portion matches the trench of the slide portion. Consequently, there is no risk that the mowing blade is dismounted from the stay during operation.

The bent portion of the slide portion of the fitting trench may include the enlarged portion of the hole to enable the locking portion to change a direction. Therefore, the locking portion can be smoothly slid on the slide portion.

The shaft portion of the locking portion may be configured to integrally rotate with the mowing blade. At a mount/dismount time, a direction of a shaft width can be set by controlling the mowing blade. Therefore, directionality of the locking portion can be controlled by holding the mowing blade, and the mowing blade can be easily horizontally. The stay 1 is a rotating body and is configured to be rotatable. Mowing blades 5 are fitted to left and right sides of the stay 1.

A connecting hole 2a of a driving shaft is formed at the center of the stay 1. Fitting trenches 6 of the mowing blades are formed at the front ends of the stay.

A shape and a size of the stay 1 are suitably set depending on a machine type. In the embodiment, a stay having a total length of 700 mm to 1000 mm, a width of 80 mm to 100 mm, and a plate thickness of a few millimeters is used, as an example.

### (A configuration of the fitting trench)

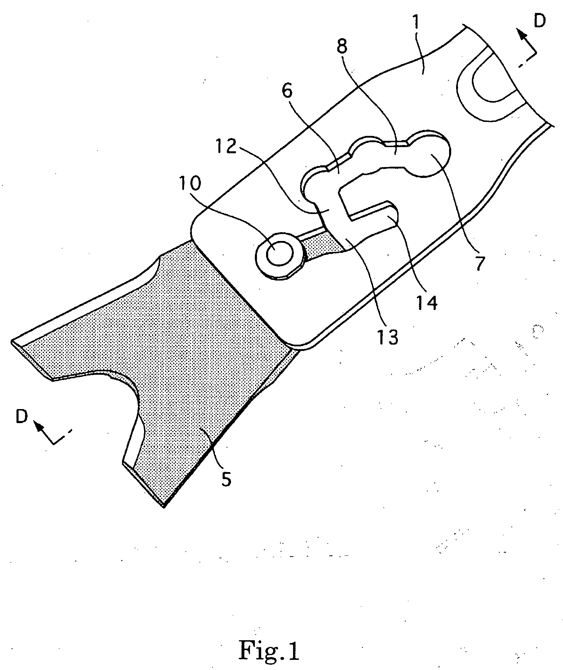

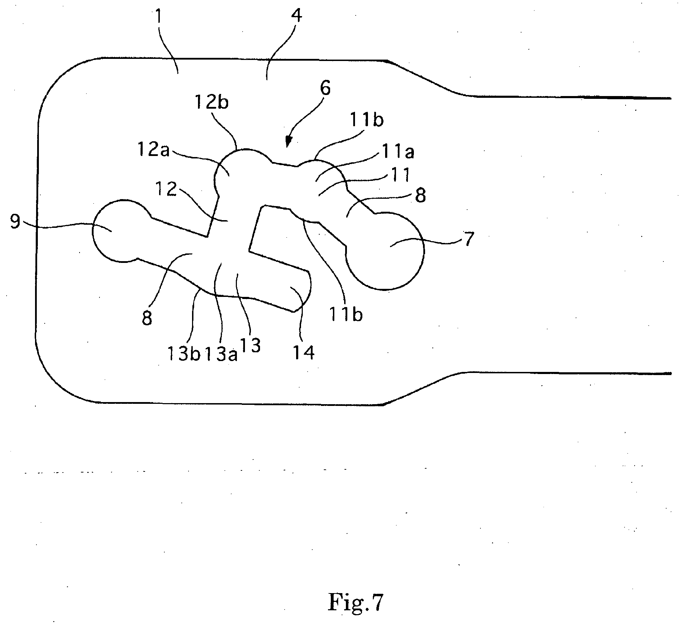

Each fitting trench 6 has a cut hole formed by piercing through the front end of the stay 1 as shown in Figs. 1 and 7.

The fitting trench 6 has a mount/dismount portion 7 that enables insertion of a locking portion 10, a slide portion 8 that is extended from the mount/dismount portion 7 to the front, and a fixing portion 9 that is formed at a front end of the slide portion 8.

The mount/dismount portion 7 is formed at a base side of the stay 1. The slide portion 8 is extended to an external peripheral side of the stay, and the fixing portion 9 is arranged at a front end of the slide portion 8.

The mount/dismount portion 7 is a portion to start locking the locking portion 10 with the fitting trench 6 by inserting a head portion of the locking portion 10 into the mount/dismount portion 7. The hole of the mount/dismount portion 7 is formed larger than that of other portions of the fitting trench 6.

The slide portion 8 is a path for guiding the locking portion 10 to the fixing portion 9. The trench is set to have a smaller width than that of the mount/dismount portion 7 to avoid disengagement of the locking portion 10.

The fixing portion 9 works after the locking portion 10 finally reaches the fixing portion 9. Although the trench is set to have a smaller width than that of the mount/dismount portion 7 to avoid disengagement of the locking portion 10, the fixing portion 9 has a large size of the hole to allow rotation of the shaft portion of the locking portion.

The fitting trench 6 in a plan view is shaped in approximately a numeric character 4 that has the mount/dismount portion 7 as a crest. The fitting trench 6 includes a curved line 11 obliquely extended from the mount/dismount portion 7 to outside, a lateral line 12 bent from the curved line 11 to a lateral direction, and a straight line 13 that is bumped by the lateral line 12 and extends to a further oblique direction.

That is, the slide portion 8 starts from the mount/dismount portion 7 and reaches the fixing portion 9, by passing through a first corner 11a, a second corner 12a, and a third corner 13a.

The curved line 11 is bent in a V shape. The bent portion (the first corner 11a) is formed with an arc enlarged portion 11b to facilitate a directional change of the locking portion.

A connection portion (the second corner 12a) of the curved line and the lateral line is similarly bent. Therefore, the bent portion is formed with an arc enlarged portion 12b to facilitate a directional change of the locking portion.

A connection portion (the third corner 13a) where the lateral line 12 bumps the straight line 13 is also bent. The bent portion is also formed with an arc enlarged portion 13b to facilitate a directional change of the locking portion.

The bumped portion of the lateral line 12 and the straight line 13 is branched. Since this branched path 14 is formed, even when the mowing blade 5 that operates at the fixing portion 9 receives some impact and is bounced, the mowing blade 5 enters the branched path 14 without entering the lateral line 12. Therefore, backsliding to a direction of the mount/dismount portion 7 can be blocked, and there is no risk that the mowing blade 5 is dismounted. Since only the straight line 13 is receded, the mowing blade is returned to a position of the fixing portion 9 by centrifugal force.

### (A configuration of the locking portion)

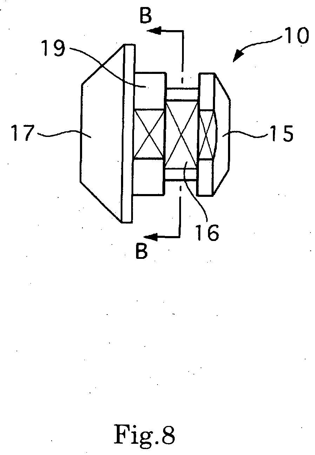

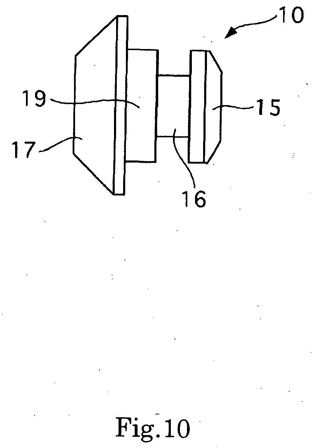

The locking portion 10 includes a head portion 15 that is locked with the stay 1, a shaft portion 16 that is connected to the stay 1 by piercing through the mowing blade 5, and a seat portion 17 that is locked with the mowing blade 5, as shown in Figs. 8 to 11.

A circular head portion 15 is arranged at an upper end of the locking portion 10. The shaft portion 16 hangs from a center of the head portion 15, and the seat portion 17 in a circular shape is arranged at a lower end of the shaft portion.

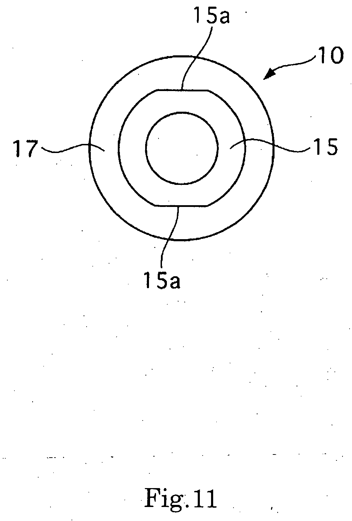

The head portion 15 in a plan view has approximately a circular shape (see Fig. 11), and parts of both circular ends are cut in parallel. These cut lines at both ends function as confirmation lines 15a that make it possible to visually confirm directionality of a shaft width as described in detail later.

The head portion 15 in a plan view has a slightly smaller shape than that of the mount/dismount portion 7 of the fitting trench 6 to allow the head portion 15 to pass through the mount/dismount portion 7. However, the head portion 15 in a plan view is larger than other portions of the fitting trench 6, that is, the slide portion 8 and the fixing portion 9, and does not allow the head portion 15 to be disengaged from the fitting trench of other than the mount/dismount portion 7.

Therefore, once the head portion is inserted into the mount/dismount portion 7, disengagement of the head portion from other positions of the fitting trench 6 is blocked, and the head portion can slide on the fitting trench 6, and is rotatably locked.

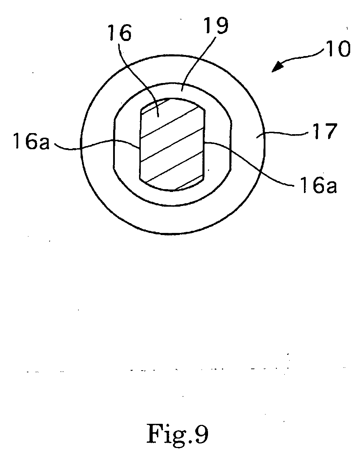

The shaft portion 16 has parts of a circular rotational cross section cut straight in parallel, as shown in Fig. 9.

Since both ends 16a of the circle are cut straight, the shaft portion 16 appears to have a large width and also appears to have a small width in a side view. Since the shaft portion 16 rotates, the shaft width changes between small and large in the fitting trench 6.

Therefore, when the shaft portion 16 in a small-width shape is slid on the fitting trench 6, the shaft portion 16 can smoothly slide on the fitting trench 6. The shaft portion 16 in a large-width shape cannot slide on the fitting trench 6 since the shaft portion 16 in this shape exceeds the trench width of the fitting trench 6.

As described above, since the shaft portion 16 has both a large-width position and a small-width position, passing of the shaft portion 16 through the slide portion 8 is controlled, once the locking portion 10 is fixed to the fixing portion 9. Consequently, backsliding of the locking portion 10 from the fixing portion 9 is prevented.

Since the fixing portion 9 is a portion that supports the mowing blade 5 rotatably by setting the mowing blade 5 there, the fixing portion 9 has a sufficiently large hole that allows the shaft portion 16 in a large-width shape to rotate.

The confirmation line 15a of the head portion 15 is matched with a thickness direction of the shaft portion 16. By visually confirming the confirmation line 15a (a cut portion) of the head portion 15, a thickness of the shaft portion 16 positioned at the fitting trench 6 can be confirmed.

That is, in sliding the locking portion, the locking portion can be passed through the fitting trench 6 in a small-width shape of the shaft portion, when the locking portion is passed by matching the small-width position of the confirmation line 15a.

The seat portion 17 of the locking portion 10 is brought into contact with the mowing blade 5, and supports the stay 1 and the mowing blade 5 by superimposing the mowing blade 5 on the stay 1. A convex portion 19 (a stage) that is engaged with the bent shape of a fitting hole 18 of the mowing blade 5 is formed on the seat portion 17. Since this convex portion 19 is engaged with the fitting hole 18 of the mowing blade 5, the mowing blade 5 and the locking portion 10 integrally rotate after the mowing blade 5 is set to the stay 1.

### (A configuration of the mowing blade)

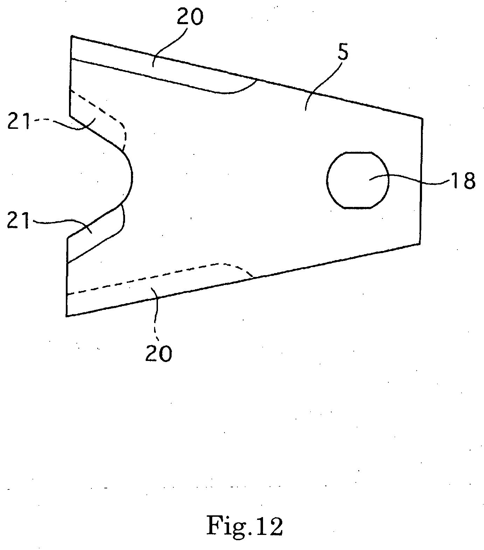

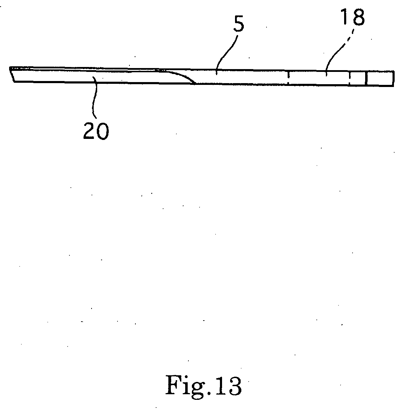

The mowing blade 5 is a tabular steel material, as shown in Figs. 12 and 13. The mowing blade 5 has a trapezoidal body that is extended from a base portion forward, as a total shape. The base portion has the fitting hole 18, and blades 20 are formed on side surfaces. A center portion at the front of the mowing blade 5 is caved, and blades 21 are formed in this caved portion.

The blades 20 and 21 that are positioned in a rotation direction on the mowing blade 5 cut grass in contact with the grass. When the blades are abraded, the mowing blade 5 is reversed, and the blades at the opposite side can be used.

The mowing blade 5 is flexibly fitted to the stay 1 to let out impact to protect a blade edge from being damaged due to contact with a barrier such as a stone. The mowing blade 5 can rotate by 360 degrees in a horizontal direction around a connecting portion with the stay 1. When necessary, a stopper or a control unit is provided that controls a rotation angle.

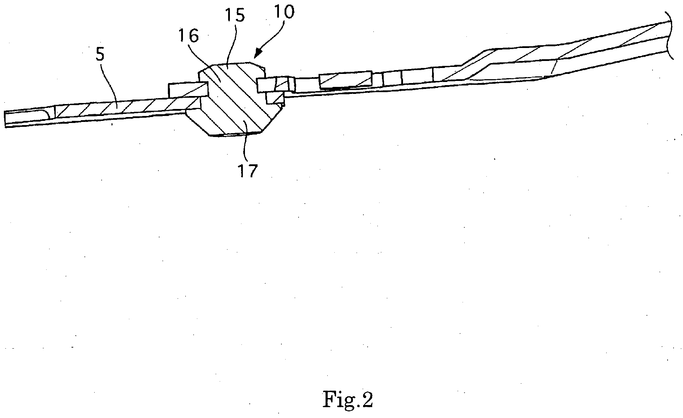

The fitting hole 18 is shaped such that both sides of a circular hole are cut. The convex portion 19 of the seat portion of the locking portion 10 is engaged with this hole, and is fitted to the stay 1 (see Fig. 2). Although the mowing blade 5 and the locking portion 10 are separate bodies, the mowing blade 5 and the locking portion 10 are integrally rotated in a set state.

The mowing blade 5 and the stay 1 are locked with each other by being sandwiched between the head portion 15 of the locking portion 10 and the seat portion 17 in a state that parts of front ends of the stay and of the base portion of the mowing blade 5 and the stay 1 face each other. The shaft portion 16 pierces through both the mowing blade 5 and the stay 1, and rotatably supports the mowing blade 5.

### (Operation)

Operation of the invention is explained next.

In fitting the mowing blade 5 to the stay 1, the head portion 15 of the locking portion 10 is inserted from a lower side of the fitting hole 18 of the mowing blade 5. The head portion 15 is further inserted from below the mount/dismount portion 7 of the fitting trench 6.

With this arrangement, the seat portion 17 is brought into contact with a lower surface of the mowing blade 5, the head portion 15 is stretched to an upper side of the stay 1, and both ends of the head portion 15 are locked with the fitting trench 6. The stay 1 and the mowing blade 5 are superimposed between the head portion 15 and the seat portion 17 and are connected to the shaft.

The head portion 15 is stretched to an upper side of the stay 1 and is locked with an edge of the trench. The shaft portion 16 pierces through the hole, and is stretched downward. The seat portion 17 supports the mowing blade. Since the convex portion 19 of the seat portion 17 matches and is engaged with a bent shape of the fitting hole 18 of the mowing blade 5, the locking portion 10 and the mowing blade 5 integrally rotate.

After the mowing blade 5 is fitted to the mount/dismount portion 7 of the stay 1 by the locking portion 10, the locking portion 10 and the mowing blade 5 are slid along the slide portion 8.

Since the width of the slide portion 8 is set smaller than that of the mount/dismount portion 7, a direction of the small width of the shaft portion 16 is selected, and the shaft portion 16 is slid on the fitting trench 6 by keeping this direction.

The enlarged portions 11b, 12b, 13b for changing a direction are formed on the bent portions at the first corner 11a, the second corner 12a, and the third corner 13a, respectively, to enable the shaft portion to pass smoothly.

After the shaft portion 16 is slid to the fixing portion 9, the shaft portion 16 and the mowing blade 5 can rotate by 360 degrees since the hole is set larger than that of the slide portion 8 at the fixing portion 9.

Although the mowing blade 5 is set rotatable to let out impact when the mowing blade 5 is in contact with a barrier while cutting grass, a control unit of a rotation angle can be separately provided.

The mowing blade 5 is always biased toward the outside by centrifugal force while cutting grass. However, there is a possibility that the mowing blade 5 is bounced toward the inside when some impact is applied to the mowing blade 5.

The mowing blade 5 cannot easily enter the slide portion 8 even when the mowing blade 5 is bounced toward the inside, when a rotation position of the shaft portion 16 does not match a narrow position since the slide portion 8 has a small width of the trench. Consequently, backward movement of the mowing blade 5 is blocked.

Even when the mowing blade 5 enters the slide portion 8, the mowing blade 5 does not move backward through only the straight line 13 and further go backward from the branched path 14 to the lateral line 12. Therefore, separation and dropout of the butting blade 5 can be securely blocked.

When friction or the like occurs in the mowing blade 5 or when the mowing blade 5 needs to be replaced because of maintenance or the like, the stay 1 is stopped. The mowing blade 5 is controlled by hand, and the shaft portion 16 is moved backward on the slide portion 8 along the fitting trench.

At this time, the shaft portion 16 needs to be moved backward on the fitting trench 6 by matching a narrow direction of the shaft portion 16 with the fitting trench 6. Since the position confirmation line 15a of the shaft portion 16 is formed on the head portion 15, the shaft portion 16 can be easily extracted by visually selecting and adjusting a direction of the shaft.

The embodiment is explained above. A detailed configuration of the invention is not limited to the above embodiment, and a design alteration and the like within a range not deviating from the gist of the invention are all included in the invention.

For example, in the above embodiment, the fitting trench 6 in a plan view has a shape of approximately a letter of 4 that has the mount-dismount portion as a crest. However, other configuration can be also employed for this shape. A bent portion and a branched portion of the fitting trench are also included in the invention.

In the above embodiment, the locking portion 10 and the mowing blade 5 are explained as separate members. However, the locking portion 10 that is integrated with the mowing blade 5 is also included in the invention.

Further, in the above embodiment, although a hole is formed as the fitting trench 6, a configuration that a rail-shaped trench is formed on the stay is also included in the invention.

### BRIEF DESCRIPTION OF THE DRAWINGS

Fig. 1 is a perspective view of a mount/dismount portion of a mowing blade.
Fig. 2 is a cross-sectional view cut along a line D-D.

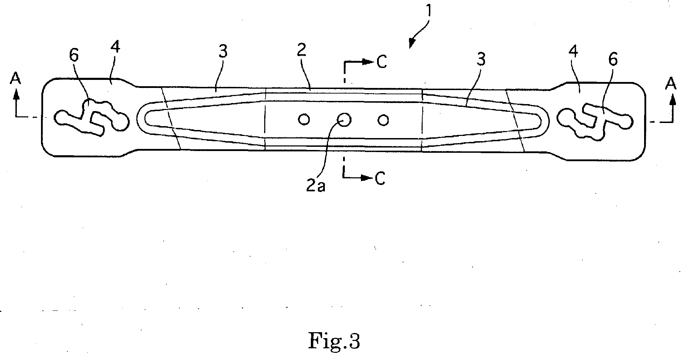

Fig. 3 is a plan view of a stay.

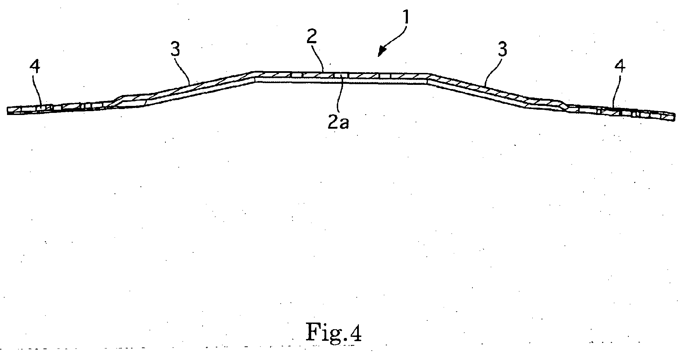

Fig. 4 is a cross-sectional view cut along a line A-A.

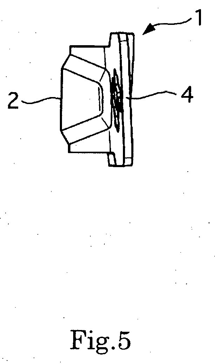

Fig. 5 is a side view of the stay.

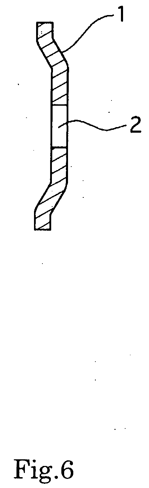

Fig. 6 is a cross-sectional view cut along a line C-C.
Fig. 7 is a plan view of a fitting trench.
Fig. 8 is a front view of a locking portion.
Fig. 9 is a cross-sectional view cut along a line B-B.
Fig. 10 is a side view of the locking portion.
Fig. 11 is a plan view of the locking portion.
Fig. 12 is a plan view of a mowing blade.
Fig. 13 is a side view of the mowing blade.
Fig. 14 is a schematic configuration diagram of a mowing machine according to a conventional example.

### DESCRIPTION OF REFERENCE NUMBERS

- 1: Stay
- 2: Center portion
- 2a: Connecting hole
- 3: Oblique portion
- 4: Front end
- 5: Mowing blade
- 6: Fitting trench
- 7: Mount/dismount portion
- 8: Slide portion
- 9: Fixing portion
- 10: Locking portion
- 11: Curved line
- 11a: First corner
- 11b: Enlarged portion
- 12: Lateral line
- 12a: Second corner
- 12b: Enlarged portion
- 13: Straight line
- 13a: Third corner
- 13b: Enlarged portion
- 14: Branched path
- 15: Head portion
- 15a: Confirmation line
- 16: Shaft portion
- 16a: Both ends
- 17: Seat portion
- 18: Fitting hole
- 19: Convex portion
- 20: Blade
- 21: Blade

## Claims

1. A mount/dismount structure of a mowing blade (5) of a mowing machine, as a mount/dismount structure of a mowing blade (5) that is fitted to a front end (4) of a rotary stay (1) of a grass mower, wherein
a fitting trench (6) for the mowing blade (5) is formed on a head portion of the stay (1),
the mowing blade (5) is rotatably fitted to the fitting trench (6) via a locking portion (10),
the fitting trench (6) has a mount/dismount portion for the locking portion (10), and a fixing portion (9) for the locking portion (10), and
the locking portion (10) is inserted from the mount/dismount portion (7), and the mowing blade (5) is fitted by sliding the locking portion (10) to the fixing portion (9) along the fitting trench (6), **characterised in that**
the fitting trench (6) is configured by a cut hole piercing through a front to a back of the stay (1) in a plate shape,
the locking portion (10) is configured to lock a shaft portion (16) by piercing the shaft portion (16) through the fitting trench (6), and
the locking portion (10) includes a head portion (15) that is locked in the stay (1), the shaft portion (16) that is connected to the stay (1) by piercing through the mowing blade (5), and a seat portion (17) that is locked with the mowing blade (5), wherein
the mount/dismount portion of the fitting trench (6) has a wide hole that makes it possible to mount/dismount the head portion (15) of the locking portion (10), and a slide portion (8) of the fitting trench (6) and the fixing portion (9) have a small hole set respectively to block dropout of the head portion (15) that is locked, wherein a slide direction of the slide portion (8) is bent or branched.

2. The mount/dismount structure of a mowing blade (5) of a mowing machine according to claim 1, wherein the mount/dismount portion (7) is set at a base side of the stay (1), and the fixing portion (9) is set at a front end (4) side of the stay (1).

3. The mount/dismount structure of a mowing blade (5) of a mowing machine according to claim 1 or claim 2, wherein
the shaft portion (16) that is pierced through the fitting trench (6) can have a shaft width changed relative to the fitting trench (6) by rotating the shaft portion (16), and
the slide portion (8) has a trench width that allows the shaft portion (16) to pass there only when a width of the shaft portion (16) is set small.

4. The mount/dismount structure of a mowing blade (5) of a mowing machine according to claim any one of the preceding claims, wherein
the bent portion of the slide portion (8) of the fitting trench (7) includes an enlarged portion of the hole to enable the locking portion (10) to change a direction.

5. The mount/dismount structure of a mowing blade (5) of a mowing machine according to any one of the preceding claims, wherein
the shaft portion (16) of the locking portion (10) is configured to integrally rotate with the mowing blade (5), and at a mount/dismount time, a direction of a shaft width is set by controlling the mowing blade (5).

## Patentansprüche

1. Struktur zur Montage/zum Abnehmen eines Mähmessers (5) einer Mähmaschine, als Struktur zur Montage/zum Abnehmen eines Mähmessers (5), das am vorderen Ende (4) einer Drehstütze (1) eines Rasenmähers abgebracht ist, wobei
an einer Kopfpartie der Stütze (1) ein Montagegraben (6) für das Mähmesser (5) ausgebildet ist,
das Mähmesser (5) über eine Verriegelungspartie (10) drehbar am Montagegraben (6) angebracht ist,
der Montagegraben (6) eine Partie (7) zur Montage/zum Abnehmen der Verriegelungspartie (10) und eine Befestigungspartie (9) für die Verriegelungspartie (10) aufweist, und
die Verriegelungspartie (10) von der Partie (7) zur Montage/zum Abnehmen aus eingefügt wird und zur Montage des Mähmessers (5) die Verriegelungspartie (10) entlang dem Montagegraben (6) zur Befestigungspartie (9) geschoben wird, **dadurch gekennzeichnet, dass**
der Montagegraben (6) durch ein Durchgangsloch von einer Vorderseite zu einer Rückseite der Stütze (1) in einer Plattenform gebildet wird,
dass die Verriegelungspartie (10) zum Verriegeln einer Schaftpartie (16) durch Durchstechen der Schaftpartie (16) durch den Montagegraben (6) ausgebildet ist, und
dass die Verriegelungspartie (10) eine in der Stütze (1) verriegelte Kopfpartie (15), die durch Durchstechen des Mähmessers (5) mit der Stütze (1) verbundene Schaftpartie (16) und eine mit dem Mähmesser (5) verriegelte Sitzpartie (17) umfasst, wobei
die Partie des Montagegrabens (6) zur Montage/zum Abnehmen ein breites Loch hat, das die Montage/das Abnehmen der Kopfpartie (15) der Verriegelungspartie (10) ermöglicht, und wobei eine Schiebepartie (8) des Montagegrabens (6) und die Befestigungspartie (9) jeweils ein kleines Loch haben, das jeweils zur Blockierung des Herausfallens der verriegelten Kopfpartie (15) bestimmt ist, wobei eine Schieberichtung der Schiebepartie (8) gebogen oder verzweigt ist.

2. Struktur zur Montage/zum Abnehmen eines Mähmessers (5) einer Mähmaschine nach Anspruch 1, wobei Partie (7) zur Montage/zum Abnehmen auf einer Bodenseite der Stütze (1) angeordnet ist und die Befestigungspartie (9) an einem vorderen Ende (4) der Stütze (1) angeordnet ist.

3. Struktur zur Montage/zum Abnehmen eines Mähmessers (5) einer Mähmaschine nach Anspruch 1 oder Anspruch 2, wobei
die den Montagegraben (6) durchstechende Schaftpartie (16) eine Schaftbreite haben kann, die im Verhältnis zum Montagegraben (6) durch Drehen der Schaftpartie (16) geändert wird, und wobei
die Schiebepartie (8) eine Grabenbreite hat, die den Durchgang der Schaftpartie (16) nur dann ermöglicht, wenn eine Breite der Schaftpartie (16) auf klein eingestellt ist.

4. Struktur zur Montage/zum Abnehmen eines Mähmessers (5) einer Mähmaschine nach einem der vorhergehenden Ansprüche, wobei
die gebogene Partie der Schiebepartie (8) des Montagebrabens (7) eine vergrößerte Partie des Loches umfasst, um die Verriegelungspartie (10) zur Richtungsänderung zu befähigen.

5. Struktur zur Montage/zum Abnehmen eines Mähmessers (5) einer Mähmaschine nach einem der vorhergehenden Ansprüche, wobei
die Schaftpartie (16) der Verriegelungspartie (10) zur Mitdrehung mit dem Mähmesser (5) ausgelegt ist und zu einer Montage/Abnehmzeit eine Richtung einer Schaftbreite durch Steuern des Mähmessers (5) eingestellt wird.

## Revendications

1. Une structure de montage / démontage d'une lame de tonte (5) d'une tondeuse, comme structure de montage / démontage d'une lame de tonte (5) montée sur une extrémité antérieure (4) d'un support rotatif (1) d'une tondeuse à gazon,
une tranchée de montage (6) pour la lame de tonte (5) ayant été pratiquée sur une partie de tête du support (1),
la lame de tonte (5) étant montée par rotation sur la tranchée de montage (6) par le biais d'un dispositif de verrouillage (10),
la tranchée de montage (6) possédant une partie de montage / démontage (7) pour le dispositif de verrouillage (10), et une partie de fixation (9) pour le dispositif de verrouillage (10), et
le dispositif de verrouillage (10) étant inséré depuis la partie de montage / démontage (7), et la lame de tonte (5) étant montée par coulissement du dispositif de verrouillage (10) sur la partie de fixation (9) le long de la tranchée de montage (6),
**caractérisée en ce que**
la tranchée de montage (6) est configurée par un trou découpé, traversant de l'avant à l'arrière le support (1) sous forme de plaque,
le dispositif de verrouillage (10) est configuré pour verrouiller un arbre (16) en perçant l'arbre (16) à travers la tranchée de montage (6), et
le dispositif de verrouillage (10) comprenant une tête (15) fixée dans le support (1), l'arbre (16) étant connecté au support (1) en traversant la lame de tonte (5), et un siège (17) étant verrouillé avec la lame de tonte (5),
la partie de montage / démontage de la tranchée de montage (6) possédant un trou large permettant de monter / démonter la tête (15) du dispositif de verrouillage (10), et un élément coulissant (8) de la tranchée de montage (6) et de la partie de fixation (9) étant doté d'un trou de petite taille monté respectivement pour empêcher que ne retombe la tête (15) verrouillée, une direction de coulissement de l'élément coulissant (8) étant pliée ou ramifiée.

2. La structure de montage / démontage d'une lame de tonte (5) d'une tondeuse selon la revendication 1, la partie de montage / démontage (7) étant placée sur la base du support (1), et la partie de fixation (9) étant placée sur l'extrémité antérieure (4) du support (1).

3. La structure de montage / démontage d'une lame de tonte (5) d'une tondeuse selon la revendication 1 ou la revendication 2,
la largeur de l'arbre (16) traversant la tranchée de montage (6) pouvant être modifiée relativement à la tranchée de montage (6) par la rotation de l'arbre (16), et
la largeur de tranchée de l'élément coulissant (8) permettant le passage de la largeur de l'arbre (16) seulement lorsque la largeur de l'arbre (16) est réglée pour être limitée.

4. La structure de montage / démontage d'une lame de tonte (5) d'une tondeuse selon une quelconque des revendications précédentes,
la partie pliée de l'élément coulissant (8) de la tranchée de montage (7) comprenant une partie agrandie du trou, afin de permettre au dispositif de verrouillage (10) de changer de direction.

5. La structure de montage / démontage d'une lame de tonte (5) d'une tondeuse selon une quelconque des revendications précédentes,
l'arbre (16) du dispositif de verrouillage (10) étant configuré pour tourner de façon solidaire avec la lame de tonte (5), et, lors du montage / démontage, la direction de la largeur de l'arbre étant établie par le réglage de la lame de tonte (5).
